# EUROPEAN PATENT APPLICATION

(11) **EP 4 628 929 A1**
(43) Date of publication of application: **08.10.2025**
(21) Application number: 22968942.7
(22) Date of filing: 22.12.2022
(51) Int. Cl.: G01S 7/484

(54) **TRANSMITTING APPARATUS, DETECTION APPARATUS AND TERMINAL**

(71) Applicant: Shenzhen Yinwang Intelligent Technologies Co., Ltd., Shenzhen, Guangdong 518110 (CN)
(72) Inventor: XIAO, Xisheng, Shenzhen, Guangdong 518129 (CN); LIU, Jun, Shenzhen, Guangdong 518129 (CN)
(74) Representative: Gill Jennings & Every LLP
(86) International application number: PCT/CN2022/141027
(87) International publication number: WO 2024/130644

(57) **Abstract**

A transmitting apparatus, a detection apparatus, and a terminal are provided, and are used in the field of optical devices and detection technologies. The transmitting apparatus includes a first transmit module and a second transmit module. The first transmit module is configured to transmit a first light beam. The second transmit module is configured to transmit a second light beam. A longest detection distance of the first light beam is shorter than a longest detection distance of the second light beam. The second light beam has a long longest detection distance, and is applicable to long-distance detection. The first light beam has a short longest detection distance, and may be used for short-distance detection. The second transmit module transmits the second light beam, so that a blind area formed during long-distance detection can be detected. The first transmit module and the second transmit module work in a time division manner. Therefore, it is difficult for a light beam transmitted during short-distance detection to interfere with long-distance detection. This implements blind compensation detection in a near vision field range without affecting a long-distance detection capability, and enhances detection performance of the detection apparatus.

## Description

### TECHNICAL FIELD

This application relates to the field of optical devices and detection technologies, and in particular, to a transmitting apparatus, a detection apparatus, and a terminal.

### BACKGROUND

With development of information technologies, detection technologies develop rapidly, and various detection apparatuses bring great convenience to people's life and travel. For example, an advanced driver assistance system (advanced driver assistance system, ADAS) plays a very important role in an intelligent vehicle. In a traveling process of the vehicle, the advanced driver assistance system uses a detection apparatus mounted on the vehicle to detect an ambient environment, collect data, identify static and moving objects, and the like, and performs systematic calculation and analysis based on map data of a navigator, so that a driver is aware of potential hazards in advance, and driving comfort and safety of the vehicle are effectively improved. The detection apparatus may be considered as an "eye" for sensing an environment, and includes a vision system sensor like a camera, and a radar system sensor like a millimeter-wave radar, a lidar, and an ultrasonic radar.

A lidar (light detection and ranging, Lidar, or referred to as a light detection and ranging apparatus) has advantages of high resolution, good detection performance, and strong concealment, and is one of important detection apparatuses in the sensing field. The lidar is a technology for transmitting a detection signal and obtaining related information of a target (for example, a feature quantity like a location, a shape, or a speed of the target) by receiving an echo reflected by the target.

To improve detection efficiency, a plurality of lasers usually need to be disposed at a transmit end of the lidar. However, transmitting fields of view formed between the plurality of lasers usually overlap, an overlapping area is irradiated by detection signals from the plurality of lasers, and an echo signal also includes echoes respectively corresponding to the plurality of lasers. Consequently, mutual detection interference is likely to occur. In addition, a longer distance between a target and a radar indicates weaker energy of an echo of the target. Therefore, when a plurality of lasers are disposed, an echo of a short-distance target is very likely to submerge an echo of a long-distance target. This greatly interferes with long-distance detection of the radar, and affects performance of the radar.

How to reduce a proportion of interference signals is an urgent problem to be resolved by a person skilled in the art.

### SUMMARY

Embodiments of this application provide a transmitting apparatus, a detection apparatus, and a terminal, to reduce a proportion of interference signals in an echo and improve detection performance.

According to a first aspect, an embodiment of this application provides a transmitting apparatus. The transmitting apparatus includes a first transmit module and a second transmit module.

The first transmit module and the second transmit module are configured to transmit light beams in a time division manner, the first transmit module is configured to transmit a first light beam, and the second transmit module is configured to transmit a second light beam.

A longest detection distance of the first light beam is shorter than a longest detection distance of the second light beam.

In this embodiment of this application, the light beam transmitted by the second transmit module has a long longest detection distance, and may be used for long-distance detection. The light beam transmitted by the first transmit module has a longest detection distance shorter than the longest detection distance of the light beam transmitted by the second transmit module, and may be used for short-distance detection. The first transmit module and the second transmit module work in a time division manner. Therefore, it is difficult for a light beam transmitted during short-distance detection to interfere with long-distance detection. This implements blind compensation detection in a near vision field range without affecting a long-distance detection capability, and enhances detection performance of a detection apparatus.

In a possible implementation of the first aspect, an energy density of the first light beam is less than an energy density of the second light beam.

In the foregoing implementation, an energy density of a signal is related to a longest detection distance of the signal. When the energy density of the first light beam is low, the first light beam is more applicable to short-distance detection. Correspondingly, when the energy density of the second light beam is high, the second light beam is more applicable to long-distance detection. In addition, the longest detection distance of the first light beam is short, so that mutual interference between the first light beam and the second light beam can also be avoided, short-distance detection accuracy and long-distance detection accuracy of the detection apparatus are improved, and detection performance is improved.

Optionally, the energy density may alternatively be replaced with energy. **In** other words, energy of the second light beam is higher than energy of the first light beam.

**In** another possible implementation of the first aspect, a power of the first light beam is less than a power of the second light beam.

**In** the foregoing implementation, a power of the signal is related to the longest detection distance of the signal. When the power of the first light beam is low, the first light beam is applicable to short-distance detection. Correspondingly, when the power of the second light beam is high, the second light beam is more applicable to long-distance detection. **In** addition, the longest detection distance of the first light beam is short, so that mutual interference between the first light beam and the second light beam can also be avoided, short-distance detection accuracy and long-distance detection accuracy of the detection apparatus are improved, and detection performance is improved.

**In** another possible implementation of the first aspect, the transmitting apparatus further includes a beam homogenization component.

The beam homogenization component is configured to perform homogenization on the first light beam to obtain a first detection signal.

In the foregoing implementation, through the homogenization, the first light beam may be homogenized in angular space, so that the first detection signal covers a larger angle range, and short-distance detection covers more areas. This greatly reduces a blind area in a near vision field, significantly improves a short-distance detection capability, and improves detection performance.

In another possible implementation of the first aspect, the beam homogenization component is further configured to perform homogenization on the second light beam to obtain a second detection signal.

In the foregoing implementation, through the homogenization, the second light beam may be homogenized in the angular space, so that the second detection signal covers a larger angle range, and a vision field of the second detection signal is continuous. This reduces a blind area in the vision field.

In another possible implementation of the first aspect, an FOV of the first detection signal and the FOV of the second detection signal overlap or have no gap.

In the foregoing implementation, the FOVs of the first detection signal and the second detection signal are continuous (or overlap), so that the field of view of the first detection signal and the vision field of the second detection signal are continuous. This further reduces the blind area in the vision field, and improves detection performance.

**In** another possible implementation of the first aspect, the first transmit module and the second transmit module each include at least one laser.

**In** another possible implementation of the first aspect, the laser includes one or more of a vertical-cavity surface-emitting laser (vertical-cavity surface-emitting laser, VCSEL), a photonic crystal surface-emitting laser (photonic crystal surface-emitting semiconductor lasers, PCSEL), or the like.

The VCSEL has advantages such as a high rate, low power consumption, and a wide operating temperature range, and is applicable to detection in a plurality of environments, to ensure detection performance of the detection apparatus. The PCSEL has a wide operating wavelength range and is easy to package, so that integration of the detection apparatus can be improved.

In another possible implementation of the first aspect, the first transmit module includes a first laser and a second laser.

The first laser and the second laser are respectively disposed on two sides of the second transmit module.

In another possible implementation of the first aspect, the second transmit module includes a first laser group and a second laser group, the first laser group includes one or more lasers, and the second laser group includes one or more lasers.

The first transmit module is disposed between the first laser group and the second laser group.

In another possible implementation of the first aspect, the first transmit module includes a third laser and N fourth lasers, and the second transmit module includes N fifth lasers, where N is an integer, and N≥2.

In a first direction, the third laser is disposed between a third laser group and a fourth laser group.

The third laser group includes M laser pairs, the M laser pairs are arranged in the first direction, each laser pair in the M laser pairs includes one fourth laser and one fifth laser that are disposed in a second direction, and a first gap exists between the fourth laser and the fifth laser in each laser pair, where M is an integer, and N>M≥2.

The fourth laser group includes N-M laser pairs, the N-M laser pairs are arranged in the first direction, each laser pair in the N-M laser pairs includes one fourth laser and one fifth laser that are disposed in the second direction, and a second gap exists between the fourth laser and the fifth laser in each laser pair.

**In** the second direction, a location occupied by the third laser includes a location of the first gap and a location of the second gap, and the first direction is perpendicular to the second direction.

In this implementation, the third laser supplements a gap between the fourth laser and the fifth laser in the second direction, so that continuity of a vision field in the second direction is improved, and short-distance detection with a larger vision field is implemented. This further improves detection efficiency, and enhances detection performance.

In another possible implementation of the first aspect, the first transmit module is configured to transmit the first light beam in a first time period, the second transmit module is configured to transmit the second light beam in a second time period, and the first time period and the second time period do not overlap.

In another possible implementation of the first aspect, the second transmit module is further configured to transmit a third light beam in the second time period, and a longest detection distance of the third light beam is shorter than the longest detection distance of the second light beam.

In this implementation, the second transmit module may transmit "weak light" in the second time period, so that short-distance detection with a larger vision field can be implemented. This further improves the short-distance detection capability and detection efficiency.

In another possible implementation of the first aspect, the transmitting apparatus further includes a collimating lens group.

The collimating lens group is configured to collimate the light beams transmitted by the first transmit module and the second transmit module.

Through the collimating lens group, a collimation degree of a transmitted light beam can be improved, and effectiveness of a detection result can be improved.

**In** another possible implementation of the first aspect, a distance between a focal plane of the collimating lens group and the collimating lens group is a first distance.

A distance between a first plane of the transmitting apparatus and the collimating lens group is a second distance, and the first plane is a plane on which a transmit end face of the first transmit module and a transmit end face of the second transmit module are located.

The second distance is different from the first distance.

Through proper defocus, the light beams transmitted by the first transmit module and the second transmit module are dispersed to some extent, so that a beam homogenization effect can be improved. This improves the short-distance detection capability.

According to a second aspect, an embodiment of this application provides a transmitting apparatus. The transmitting apparatus includes a first transmit module, a second transmit module, and a beam homogenization component.

The first transmit module is configured to transmit a first light beam, the second transmit module is configured to transmit a second light beam, and a longest detection distance of the first light beam is shorter than a longest detection distance of the second light beam.

The beam homogenization component is configured to perform homogenization on the first light beam to obtain a first detection signal.

In a possible implementation of the second aspect, the beam homogenization component is further configured to perform homogenization on the second light beam to obtain a second detection signal.

In a possible implementation of the second aspect, an FOV of the first detection signal and an FOV of the second detection signal overlap or have no gap.

In a possible implementation of the second aspect, the first transmit module and the second transmit module are configured to transmit light beams in a time division manner.

According to a third aspect, an embodiment of this application further provides a detection apparatus. The detection apparatus includes a transmitting apparatus and a photodetector, and the transmitting apparatus includes the transmitting apparatus according to any one implementation of the first aspect or the transmitting apparatus according to any one implementation of the second aspect.

A first transmit module in the transmitting apparatus is configured to transmit a first light beam, and a second transmit module in the transmitting apparatus is configured to transmit a second light beam.

The photodetector is configured to receive an echo signal corresponding to the first light beam and an echo signal corresponding to the second light beam.

**In** a possible implementation of the third aspect, the detection apparatus further includes a control module. The control module is configured to generate a first control signal and a second control signal, and the first control signal is different from the second control signal.

The first control signal is used to control the first transmit module to transmit a light beam.

The second control signal is used to control the second transmit module to transmit a light beam.

According to a fourth aspect, an embodiment of this application further provides a terminal. The terminal includes the transmitting apparatus according to any one implementation of the first aspect, or includes the transmitting apparatus according to any one implementation of the second aspect, or includes the detection apparatus according to any one implementation of the third aspect.

Optionally, the terminal is a vehicle, an unmanned aerial vehicle, or a robot.

For beneficial effects of the third aspect and the fourth aspect of this application, refer to the beneficial effects of the first aspect or the second aspect. Details are not described herein again.

### BRIEF DESCRIPTION OF DRAWINGS

The following briefly describes accompanying drawings used in descriptions of embodiments.
FIG. 1 is a diagram of a transmitting field of view and a receiving field of view of a detection apparatus;
FIG. 2 is a diagram of a structure of a transmitting apparatus according to an embodiment of this application;
FIG. 3 is a diagram of a detection range according to an embodiment of this application;
FIG. 4 is a diagram of a light emitting time sequence according to an embodiment of this application;
FIG. 5 is a diagram of another detection range according to an embodiment of this application;
FIG. 6 is a diagram of another light emitting time sequence according to an embodiment of this application;
FIG. 7 is a diagram of an FOV of a first light beam and an FOV of a second light beam according to an embodiment of this application;
FIG. 8 is a diagram of another FOV of a first light beam and another FOV of a second light beam according to an embodiment of this application;
FIG. 9 is a diagram of another transmitting apparatus according to an embodiment of this application;
FIG. 10 is a diagram of a homogenization function of a beam homogenization component according to an embodiment of this application;
FIG. 11 is a diagram of a possible beam homogenization direction according to an embodiment of this application;
FIG. 12 is a diagram of another possible beam homogenization direction according to an embodiment of this application;
FIG. 13 is a diagram of an FOV of a transmitting apparatus according to an embodiment of this application;
FIG. 14 is a diagram of a light spot according to an embodiment of this application;
FIG. 15 is a diagram of an FOV of another transmitting apparatus according to an embodiment of this application;
FIG. 16 is a diagram of another light spot according to an embodiment of this application;
FIG. 17 is a diagram of locations of a first transmit module and a second transmit module according to an embodiment of this application;
FIG. 18 is another diagram of locations of a first transmit module and a second transmit module according to an embodiment of this application;
FIG. 19 is another diagram of locations of a first transmit module and a second transmit module according to an embodiment of this application;
FIG. 20 is a diagram of another possible transmitting apparatus according to an embodiment of this application;
FIG. 21 is a diagram of two light shapes according to an embodiment of this application;
FIG. 22 is a diagram of other two light shapes according to an embodiment of this application;
FIG. 23 is a diagram of an FOV according to an embodiment of this application;
FIG. 24 is a diagram of a possible transmitting apparatus according to an embodiment of this application;
FIG. 25 is a diagram of other two light shapes according to an embodiment of this application;
FIG. 26 is a diagram of a structure of another terminal according to an embodiment of this application;
FIG. 27 is a diagram of a possible transmitting apparatus according to an embodiment of this application; and
FIG. 28 is a diagram of an FOV of a transmitting apparatus according to an embodiment of this application.

### DESCRIPTION OF EMBODIMENTS

The following further describes in detail embodiments of this application with reference to the accompanying drawings.

For ease of understanding, some concepts related to embodiments of this application are described for reference by using examples below. Details are as follows.

### 1. Detection apparatus

The detection apparatus mentioned in embodiments of this application may be a lidar, or may be another optical detection apparatus, for example, an integrated detection apparatus (for example, a detection apparatus integrating a radar detector and an image sensor). The lidar is used as an example. A working principle of the lidar is to detect a target in a vision field by transmitting a detection signal and receiving an echo.

In a possible application scenario, the detection apparatus in embodiments of this application can be used in various fields such as intelligent driving, intelligent transportation, intelligent manufacturing, environment detection, surveying and mapping, and an uncrewed aerial vehicle, and can complete one or more functions of target detection, distance measurement, speed measurement, target tracking, imaging recognition, and the like.

For a possible application location, the detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus mounted on an apparatus like an uncrewed aerial vehicle, a robot, a railcar, a bicycle, a signal light, a speed measurement apparatus, or a base station. A mounting location of the detection apparatus is not limited in this application.

### 2. Field of view (field of view, FOV)

Aline of sight (line of sight, LOS) area in which transmission of a signal (for example, a radio wave or a laser) is not interrupted is required between a transmit end of a detection apparatus and a target object and/or between a receive end of the detection apparatus and the target object. The line of sight area may be understood as a vision field.

In some scenarios, a size of the vision field is related to a field of view of the detection apparatus. A larger field of view indicates a larger vision field. The field of view is an included angle that is formed by two edges of a vision field in a maximum range and that is referred to as the field of view. In embodiments of this application, a field of view in a vertical direction is an included angle formed by two edges of a vision field in the vertical direction.

The foregoing descriptions of the technical terms are optionally used in the following embodiments.

In an active detection technology, a transmit end of a detection apparatus transmits a detection signal to to-be-detected object space, so that a target in the object space can be irradiated by the detection signal. A receive end of the detection apparatus may receive an echo signal formed by reflecting the detection signal on the target, and measure related information of the target based on the echo signal.

Because a power of a signal transmitted by the detection apparatus is usually limited, when a long-distance target needs to be detected, a transmitted detection signal has a high collimation degree and a small divergence angle. Consequently, the detection signal transmitted by the detection apparatus has a poor capability of covering a short-distance area, and there is a large blind area in a near vision field. Especially when the transmit end and the receive end are in an off-axis architecture, the blind area in the near vision field greatly reduces a short-distance detection capability of the detection apparatus.

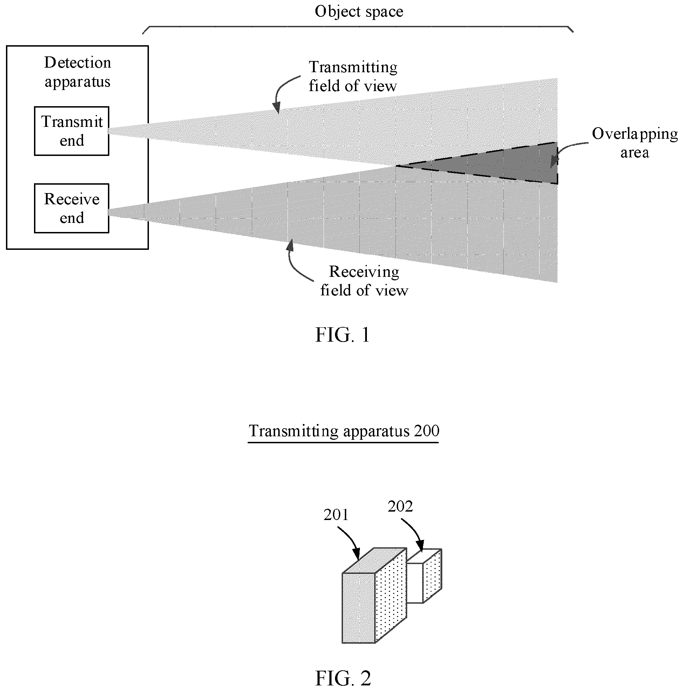

FIG. 1 is a diagram of a transmitting field of view and a receiving field of view of a detection apparatus. A transmit end and a receive end are respectively located at two ends of the detection apparatus, the transmitting field of view is object space covered by a detection signal transmitted by the transmit end, and the receiving field of view is object space in which the receive end can receive light. Because the receive end can receive an echo signal of the detection signal only when the object space is covered by the detection signal, an overlapping area between the transmitting field of view and the receiving field of view is an effective detection range of the detection apparatus. It can be learned that a start location of the overlapping area is a location far away from the detection apparatus. In short-distance object space before the overlapping area, the receive end cannot receive the echo signal of the detection signal, and a blind area in a vision field is formed. A larger off-axis degree of the transmit end and the receive end indicates a larger blind area in such a short-distance vision field.

A target located in the blind area in the vision field cannot be detected by the detection apparatus. Consequently, a short-distance detection capability of the detection apparatus is weak, availability of a detection result of the detection apparatus is affected, and a value of the detection apparatus is limited.

In view of this, embodiments of this application provide a transmitting apparatus, a detection apparatus, and a terminal, to improve a short-distance detection capability of the detection apparatus and improve detection performance.

The following describes in detail solutions in embodiments of this application.

FIG. 2 is a diagram of a structure of a transmitting apparatus according to an embodiment of this application. A transmitting apparatus 200 may include a first transmit module 201 and a second transmit module 202.

The first transmit module is configured to transmit a first light beam, and the second transmit module is configured to transmit a second light beam. A longest detection distance of the first light beam is shorter than a longest detection distance of the second light beam. The second light beam has a long longest detection distance, and is applicable to long-distance detection. The first light beam has a short longest detection distance, and may be used for short-distance detection. Therefore, two modules are disposed, one transmit module may perform long-distance detection, and the other transmit module may perform short-distance detection. In a short-distance detection process, a blind area formed during long-distance detection is detected. This greatly narrows a blind area in a vision field, improves a short-distance detection capability of a detection apparatus, and enhances detection performance of the detection apparatus.

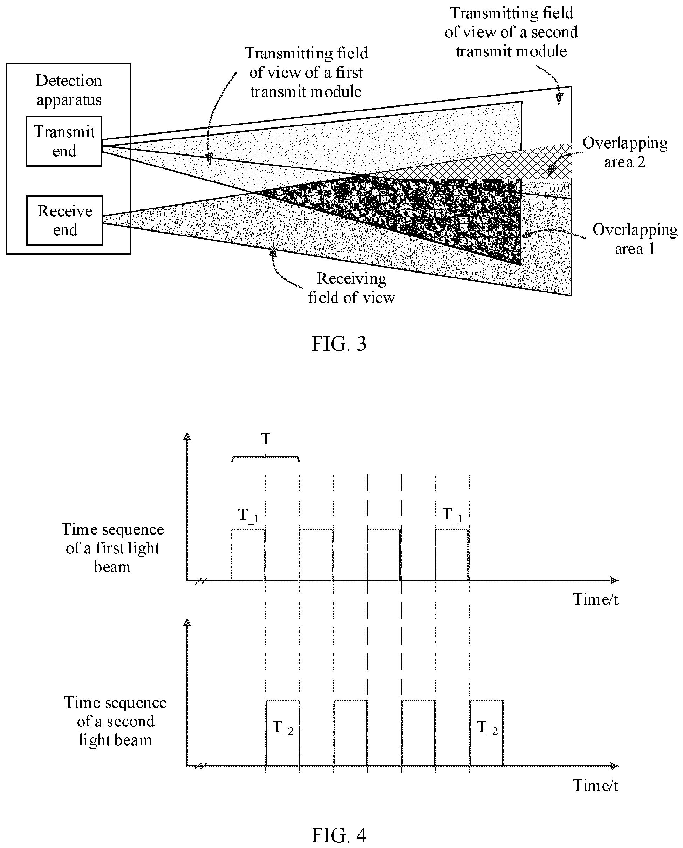

FIG. 3 is a diagram of a detection range according to an embodiment of this application. It can be learned that an overlapping area between a transmitting field of view of the first transmit module and a receiving field of view is an overlapping area 1, and an overlapping area between a transmitting field of view of the second transmit module and the receiving field of view is an overlapping area 2. The overlapping area 1 covers a short-distance range that is not covered by the overlapping area 2. In other words, light transmitted by the first transmit module can detect a part of a blind area formed by the second transmit module in a near vision field range. This improves the short-distance detection capability of the detection apparatus, and enhances the detection performance of the detection apparatus.

In a possible implementation, the first transmit module 201 and the second transmit module 202 are connected to a same circuit board. The circuit board is a support body of an electronic component. The circuit board has a conductor as a line for connecting the electronic component, and includes but is not limited to a printed circuit board (printed circuit board, PCB), a flexible printed circuit board (flexible printed circuit board, FPC), and the like.

Further, the first transmit module 201 and the second transmit module 202 may be electronic components, and are electrically connected to the circuit board together.

Alternatively, optionally, electrical performance of the first transmit module 201 and the second transmit module 202 is isolated from that of the circuit board. In this case, the first transmit module 201 and the second transmit module 202 may be fastened to the circuit board, and are not necessarily electrically connected to the circuit board.

Alternatively, the circuit board may be replaced with a substrate, and the substrate may not include a conductor for transmitting an electrical signal. The first transmit module and the second transmit module may be fastened to the substrate.

The foregoing describes an implementation of this embodiment of this application. The following provides some possible designs based on the foregoing transmitting apparatus. It should be noted that the following plurality of designs may be implemented independently or in combination. For ease of understanding, an implementation of a combination case is also described below by using an example. The following first separately describes some possible designs.

In a possible design, the first transmit module and the second transmit module may transmit light beams in a time division manner. In this way, time periods in which the first light beam and the second light beam are transmitted may be staggered, so that long-distance detection and short-distance detection are implemented in the time division manner. Therefore, it is difficult to form mutual interference between long-distance detection and short-distance detection. This implements blind compensation detection in a near vision field range without affecting a long-distance detection capability, and enhances detection performance of the detection apparatus.

In an example of time-division light emission, the first transmit module is configured to transmit the first light beam in a first time period, the second transmit module is configured to transmit the second light beam in a second time period, and the first time period and the second time period do not overlap.

FIG. 4 is a diagram of a light emitting time sequence according to an embodiment of this application. As shown in FIG. 4, in a detection cycle T, the first light beam is transmitted in a T_{_1} time period in the cycle, and the second light beam is transmitted in a T_{_2} time period in the cycle. The T_{_1} time period and the T_{_2} time period do not overlap. Certainly, the light emitting time sequence shown in FIG. 4 is described by using a time sequence of periodic light emitting as an example. This application is also applicable to aperiodic light emitting or periodic light emitting with another duration rule. For example, duration of the T_{_1} time period may be different from duration of the T_{_2} time period. For example, the duration of the T_{_1} time period may be greater than the duration of the T_{_2} time period, or the duration of the T_{_1} time period may be less than the duration of the T_{_2} time period. For example, after a plurality of T_{_1} time periods and a plurality of T_{_2} time periods, the first transmit module and the second transmit module may pause for a period of time, and then start to emit light again.

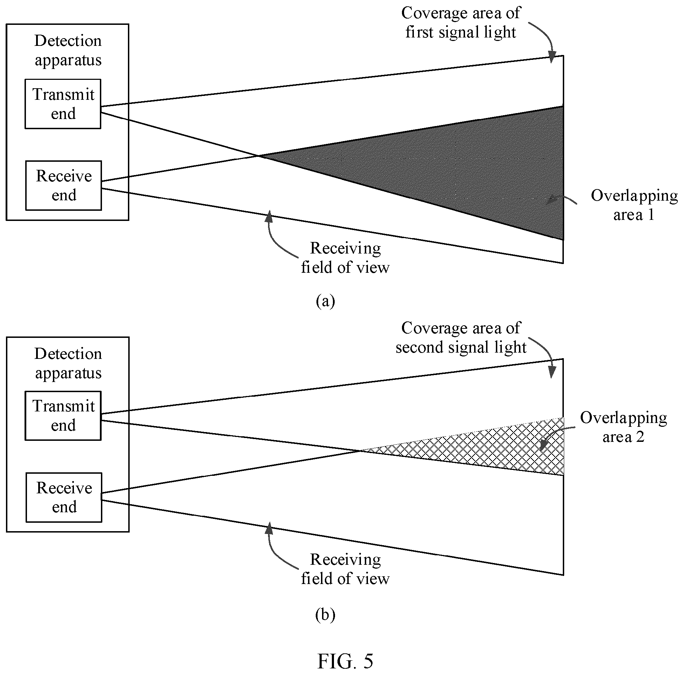

FIG. 5 is a diagram of another detection range according to an embodiment of this application. In a detection apparatus shown in FIG. 5, a transmit end includes the transmitting apparatus provided in embodiments of this application. As shown in (a) in FIG. 5, in a T_{_1} time period, a coverage area of the first light beam and a receiving field of view form an overlapping area 1, and a receive end may receive an echo signal (short-distance detection) from the overlapping area 1. As shown in (b) in FIG. 5, in a T_{_2} time period, a coverage area of the second light beam and the receiving field of view form an overlapping area 2, and the receive end may receive an echo signal (long-distance detection) from the overlapping area 2. Although the overlapping area 1 and the overlapping area 2 may overlap, because light beams are transmitted in a time division manner, the long-distance detection and the short-distance detection are time-isolated and are difficult to interfere with each other. This improves detection precision of the detection apparatus, and enhances the detection performance of the detection apparatus.

It should be noted that a vertical coordinate in FIG. 4 is an example indicating whether there is a light beam at a time, and a variable is not strictly limited. For example, the variable indicated by the vertical coordinate may indicate whether the transmit module is powered on, a level of the transmit module, or a power of signal light emitted by the transmit module.

In a possible implementation, in the second time period, the second transmit module may transmit a third light beam, and a longest detection distance of the third light beam is shorter than the longest detection distance of the second light beam. For example, an energy density of the third light beam is less than an energy density of the second light beam. For another example, a power of the third light beam is less than a power of the second light beam.

Because the longest detection distance of the third light beam is shorter than the longest detection distance of the second light beam, the third light beam is applicable to short-distance detection in the first time period. In this way, short-distance detection may be performed in a larger range in the first time period, to further improve a short-distance detection capability of the detection apparatus. Optionally, the longest detection distance of the third light beam is equal to the longest detection distance of the first light beam.

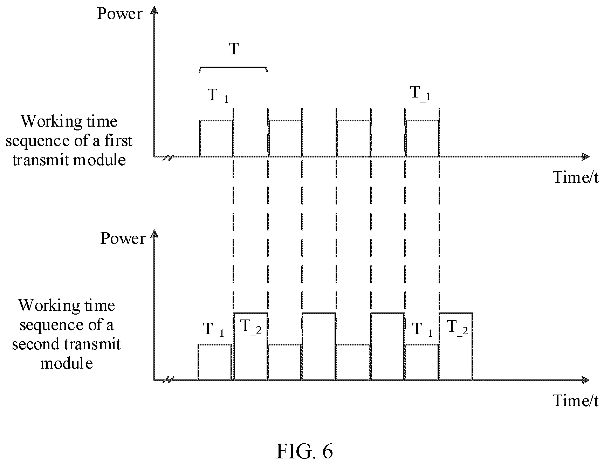

FIG. 6 is a diagram of another light emitting time sequence according to an embodiment of this application. As shown in FIG. 6, in a detection cycle T, the first transmit module transmits the first light beam in the T_{_1} time period in the cycle, the second transmit module transmits the third light beam in the T_{_1} time period in the cycle, and the second transmit module transmits the second light beam in the T_{_2} time period in the cycle. The longest detection distance of the first light beam is shorter than the longest detection distance of the second light beam, and the longest detection distance of the third light beam is also shorter than the longest detection distance of the second light beam. Therefore, in the T_{_1} time period, a light beam transmitted by the first transmit module and the second transmit module may be considered as a light beam used for short-distance detection. In the T_{_2} time period, a light beam transmitted by the second transmit module may be considered as a light beam used for long-distance detection. In this way, time isolation between long-distance detection and short-distance detection is implemented, and short-distance detection in a larger range is further implemented. This further improves detection efficiency, improves the short-distance detection capability of the detection apparatus, and enhances the detection performance.

It should be noted that a vertical coordinate "power" in FIG. 6 is an example for indicating a longest detection distance of a light beam in a time period. The power may alternatively be replaced with a current of the transmit module, an energy density of the light beam, the longest detection distance of the light beam, or the like.

This is not limited to the foregoing design. In another possible design, an energy density of the first light beam is less than the energy density of the second light beam. An energy density of a signal is related to a longest detection distance of the signal. When the energy density of the first light beam is low, the first light beam is applicable to short-distance detection. In addition, the longest detection distance of the first light beam is short, so that mutual interference between the first light beam and the second light beam can also be avoided, short-distance detection accuracy and long-distance detection accuracy of the detection apparatus are improved, and the detection performance is improved.

Optionally, when the second transmit module further transmits the third light beam, the energy density of the third light beam is less than the energy density of the second light beam.

This is not limited to the foregoing design. In another possible design, a power of the first light beam is less than the power of the second light beam. A power of the signal is related to the longest detection distance of the signal. When the power of the first light beam is low, the first light beam is applicable to short-distance detection.

Optionally, when the second transmit module further transmits the third light beam, the power of the third light beam is less than the power of the second light beam.

This is not limited to the foregoing design. In another possible design, an FOV of the first light beam incompletely overlaps an FOV of the second light beam. The incomplete overlapping herein has the following several cases:
Case 1: The FOV of the first light beam completely covers the FOV of the second light beam, and an angle range of the FOV of the first light beam exceeds an angle range of the FOV of the second light beam.

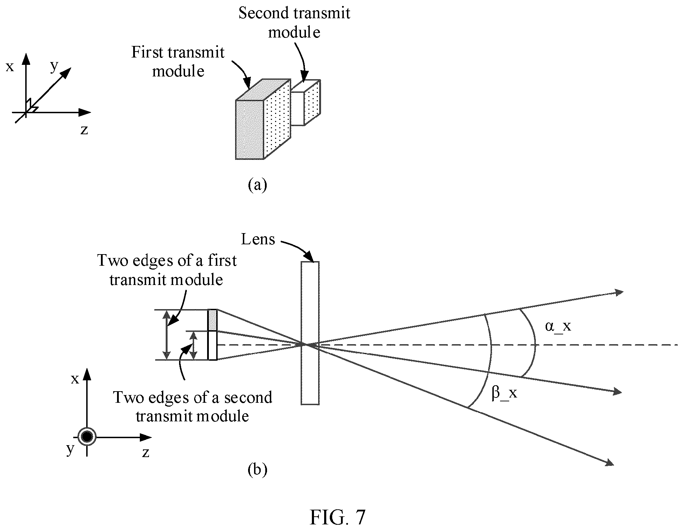

In a possible implementation, overlapping of the FOVs may be overlapping in a direction (overlapping on a plane). FIG. 7 is a diagram of an FOV of a first light beam and an FOV of a second light beam according to an embodiment of this application. Refer to (a) in FIG. 7. The first transmit module and the second transmit module are arranged in a y direction. Emergent surfaces of light beams of the first transmit module and the second transmit module are located on an x-y plane. Refer to (b) in FIG. 7. In an x direction, an FOV of the light beam transmitted by the first transmit module in object space is β_x (when a propagation direction is changed without passing through a reflection mirror or the like), and an FOV of the light beam transmitted by the second transmit module in the object space is α_x (when a propagation direction is changed without passing through a reflection mirror or the like). It can be learned that β_x and α_x have a non-overlapping angle range.

It should be understood that the FOV shown in FIG. 7 is illustrated by using an FOV in the x direction as an example. In a specific implementation process, the x direction, the y direction, and the like may be defined based on a specific situation. In addition, a dashed line shown in FIG. 7 is used to indicate a principal optical axis of a lens (for example, an optical element). Optionally, a center of the second transmit module overlaps the principal optical axis of the lens. Certainly, a solution in which the center of the second transmit module does not overlap the principal optical axis is also applicable to this application.

Optionally, with reference to FIG. 3, the overlapping area 1 may be an overlapping area between a transmitting field of view of the first transmit module and a receiving field of view in the x direction. Similarly, the overlapping area 2 may be an overlapping area between a transmitting field of view of the second transmit module and the receiving field of view in the x direction.

Case 2: The FOV of the first light beam covers a part of the FOV of the second light beam. In other words, the FOV of the first light beam has an angle that does not overlap the FOV of the second light beam, and the FOV of the second light beam also has an angle that does not overlap the FOV of the first light beam.

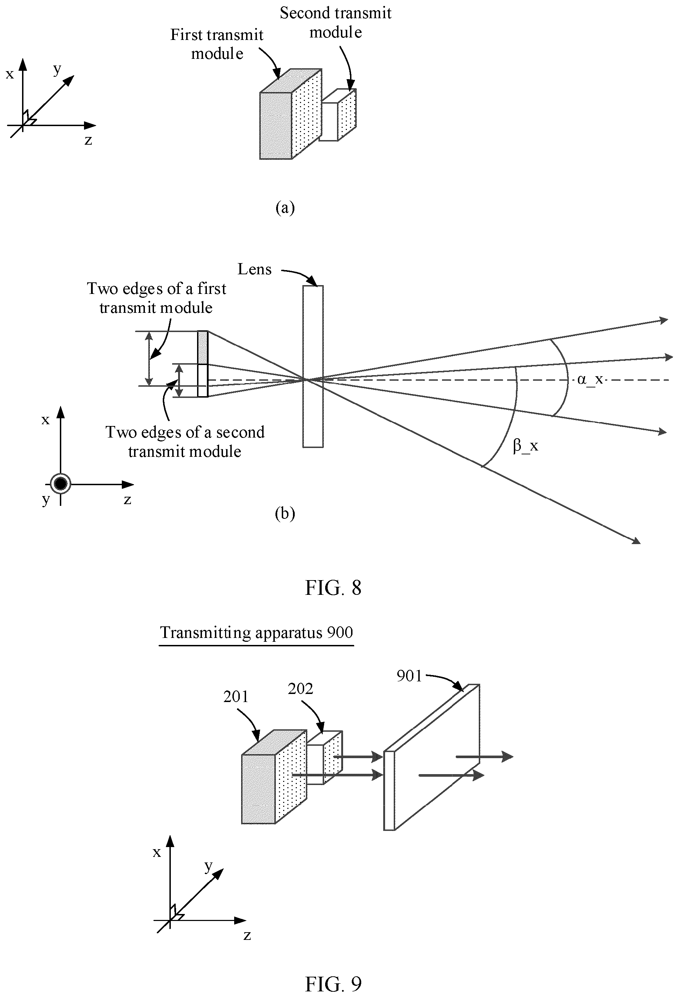

FIG. 8 is a diagram of another FOV of a first light beam and another FOV of a second light beam according to an embodiment of this application. As shown in (a) in FIG. 8, the first transmit module and the second transmit module are staggered in an x direction. As shown in (b) in FIG. 8, in the x direction, an FOV of a light beam transmitted by the first transmit module in object space is β_x, and an FOV of a light beam transmitted by the second transmit module in object space is α_x. It can be learned that β_x and α_x both have a non-overlapping angle range.

It should be noted that a lens shown in FIG. 8 and other accompanying drawings is an example optical component, and is not intended to limit the light beams transmitted by the first transmit module and the second transmit module to definitely pass through the same lens. This application is also applicable to a case in which another optical element is passed through.

Case 3: The FOV of the first light beam and the FOV of the second light beam do not have an overlapping angle. Optionally, angles formed by the two FOVs may be continuous (no gap exists between the FOVs) or discontinuous (an angle gap exists between the FOVs).

Certainly, the foregoing cases are several cases listed for ease of understanding, and there may be another case in the specific implementation process. Alternatively, the foregoing plurality of cases may be combined without mutual exclusion. For example, there may be a plurality of first transmit modules and a plurality of second transmit modules, and different first transmit modules and second transmit modules meet different cases.

This is not limited to the foregoing designs. **In** another possible design, the transmitting apparatus further includes a beam homogenization component. The beam homogenization component is configured to perform homogenization on a light beam transmitted by the transmit module. The beam homogenization component includes but is not limited to one or more of a microlens array, a diffuser, a beam homogenizer, or the like.

**In** a possible implementation, the beam homogenization component can perform homogenization on the first light beam transmitted by the first transmit module. For ease of differentiation, the first light beam passing through the beam homogenization component is referred to as a first detection signal below.

**In** a possible implementation, the beam homogenization component can perform homogenization on the second light beam transmitted by the second transmit module. For ease of differentiation, the second light beam passing through the beam homogenization component is referred to as a second detection signal below.

FIG. 9 is a diagram of another transmitting apparatus according to an embodiment of this application. A transmitting apparatus 900 includes a beam homogenization component, and the beam homogenization component 901 is disposed on a transmission path (a path from a transmit module to a vision field) of a first transmit module 201 and a second transmit module 202, and is configured to perform homogenization on light beams transmitted by the first transmit module 201 and the second transmit module 202. The first transmit module and the second transmit module share the beam homogenization component, so that a size of the transmitting apparatus can be further reduced, and an integration level can be improved. In addition, the beam homogenization component is shared, so that homogenization can be performed on the light beams transmitted by the first transmit module and the second transmit module. This improves continuity of a transmitting vision field, improves detection efficiency, and enhances detection performance.

The foregoing describes a location of the beam homogenization component, and the following describes a homogenization function of the beam homogenization component by using an example.

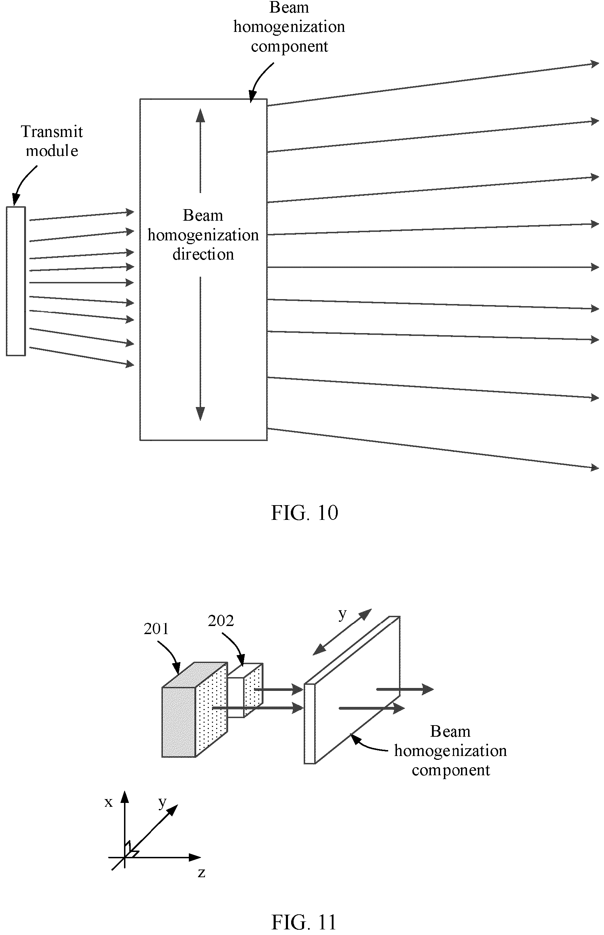

FIG. 10 is a diagram of a homogenization function of a beam homogenization component according to an embodiment of this application. The beam homogenization component may perform homogenization on the light beam transmitted by the first transmit module, to obtain the first detection signal that can cover a larger angle range, so that short-distance detection covers more areas. This further reduces a blind area in a near vision field.

It should be noted that, when the beam homogenization component performs homogenization on the light beam, a beam homogenization direction may be configured. The beam homogenization direction includes but is not limited to linear homogenization, diffusion homogenization, or the like.

FIG. 11 is a diagram of a possible beam homogenization direction according to an embodiment of this application. The first transmit module and the second transmit module are arranged in a y direction, and there is a gap in the y direction. An emergent surface of the light beam transmitted by the transmit module is located on an x-y plane, and the beam homogenization direction of the beam homogenization component is to perform homogenization in the y direction, so that the light beam is dispersed in the y direction.

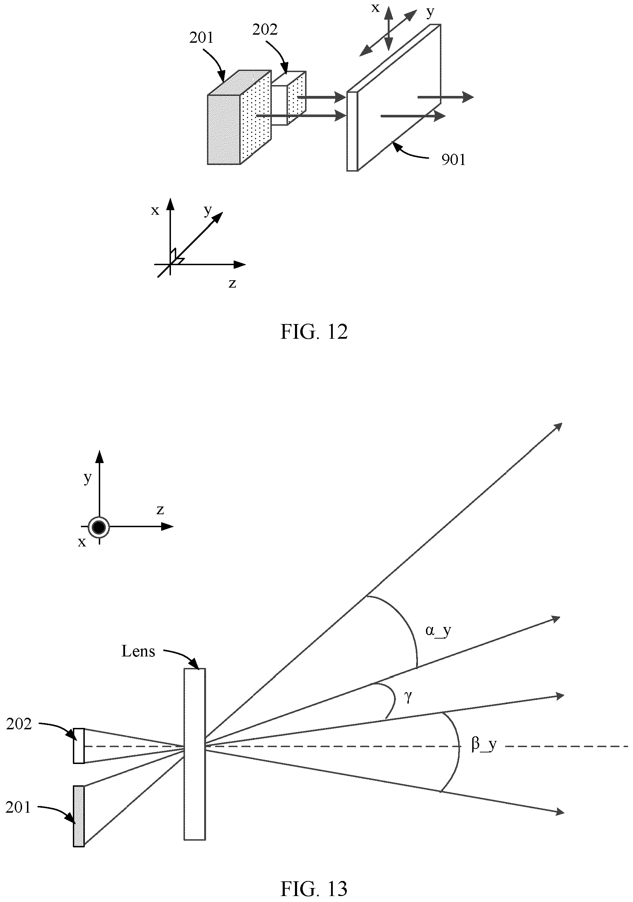

FIG. 12 is a diagram of another possible beam homogenization direction according to an embodiment of this application. The first transmit module and the second transmit module are arranged in a y direction, and there is a gap in the y direction. An emergent surface of the light beam transmitted by the transmit module is located on an x-y plane, and the beam homogenization direction of the beam homogenization component is to form diffusion homogenization on the x-y plane, so that the light beam is dispersed on the x-y plane.

Optionally, when the light beam forms diffusion dispersion on the x-y plane, a dispersion degree in an x direction is less than a dispersion degree in the y direction.

This is not limited to the foregoing design. In another possible design, an FOV of the first detection signal and an FOV of the second detection signal overlap or have no gap.

Optionally, the FOV herein is an FOV in a direction, for example, a direction from the first transmit module to the second transmit module.

Because the first transmit module and the second transmit module transmit light beams with different ranging capabilities, there may be a physical gap between the first transmit module and the second transmit module. As shown in FIG. 9, the first transmit module 201 and the second transmit module 202 are arranged in the y direction, and there is a gap in the y direction.

A gap between transmit modules causes light spots formed by the transmit modules during imaging to be discontinuous. FIG. 13 is a diagram of an FOV of a transmitting apparatus according to an embodiment of this application. There is a gap between the first transmit module 201 and the second transmit module 202 in the y direction. An FOV of the light beam transmitted by the first transmit module 201 in the y direction is β_y, and an FOV of the light beam transmitted by the second transmit module 202 in the y direction is α_y. It can be learned that in the y direction, there is an angle difference of γ between β_y and α_y. An angle difference exists between FOVs of transmit modules in a direction. Therefore, there is a gap between a transmitting field of view of the first transmit module and a transmitting field of view of the second transmit module in the y direction, so that a vision field is discontinuous. As a result, a small part of a blind area in the vision field cannot be detected.

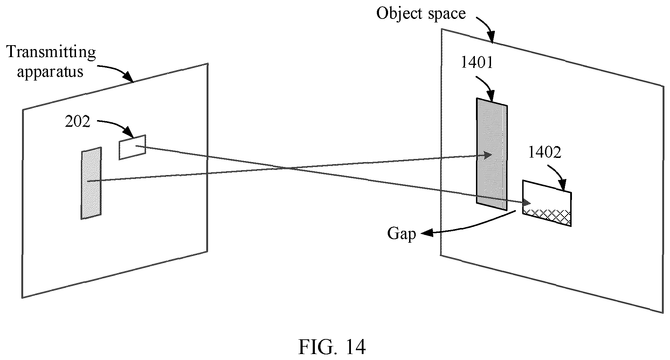

The gap between the transmitting fields of view may be intuitively sensed through light spots. FIG. 14 is a diagram of a light spot according to an embodiment of this application. A light spot 1401 is a light spot formed by the light beam transmitted by the first transmit module, a light spot 1402 is a light spot formed by the light beam transmitted by the second transmit module, and there is a gap between the light spot 1401 and the light spot 1402.

In this design, the FOV of the first detection signal and the FOV of the second detection signal overlap or have no gap. For example, the y direction is used as an example. The first light beam and the second light beam overlap or have no gap in angular space in the y direction, so that a group of detection vision fields can be continuous, to further reduce a blind area in a near vision field. This improves detection efficiency, and enhances detection performance.

Optionally, that the FOVs overlap or have no gap may be implemented by using the beam homogenization component, and/or by using a location arrangement design (for example, an additional light source is disposed in the y direction) of the first transmit module and the second transmit module, or the like.

The following describes a case in which the FOVs overlap or have no gap by using the beam homogenization component.

The beam homogenization component performs homogenization on a light beam, so that a gap between transmitting vision fields of transmit modules is filled with dispersed light, thereby further reducing a blind area in a vision field. For example, when there is a gap between the first transmit module and the second transmit module in the y direction, homogenization includes homogenization in the y direction, so that a gap between emergent light (namely, the first detection signal and the second detection signal) of the first light beam and the second light beam in angular space in the y direction is filled. This further reduces a blind area in a vision field, and improves a short-distance detection effect.

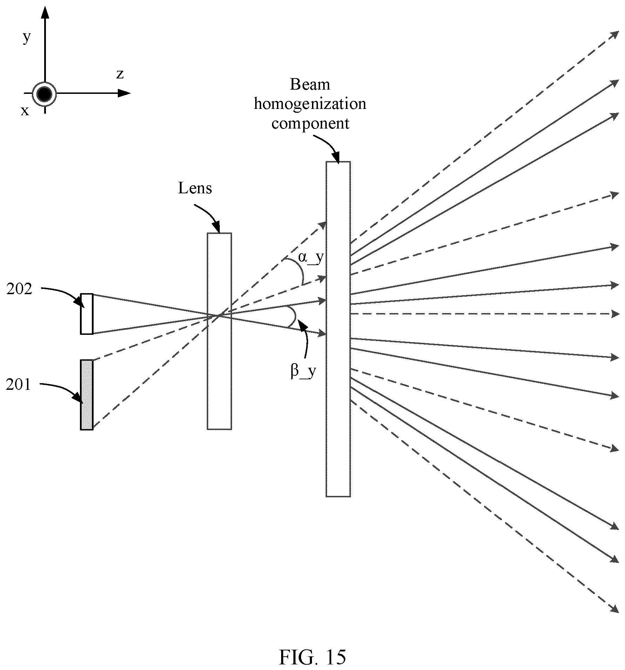

FIG. 15 is a diagram of an FOV of another transmitting apparatus according to an embodiment of this application. There is a gap between the first transmit module 201 and the second transmit module 202 in the y direction. Before passing through the beam homogenization component, an FOV of the light beam (represented by a dashed line with an arrow) transmitted by the first transmit module 201 in the y direction is β_y, and an FOV of the light beam (represented by a solid line with an arrow) transmitted by the second transmit module 202 in the y direction is α_y. In the y direction, there is an angle difference of γ between β_y and α_y. The beam homogenization component may perform homogenization on light from the first transmit module 201 and the second transmit module 202 in the y direction, so that there is no gap (overlapping) between the first detection signal and the second detection signal, and a vision field is continuous.

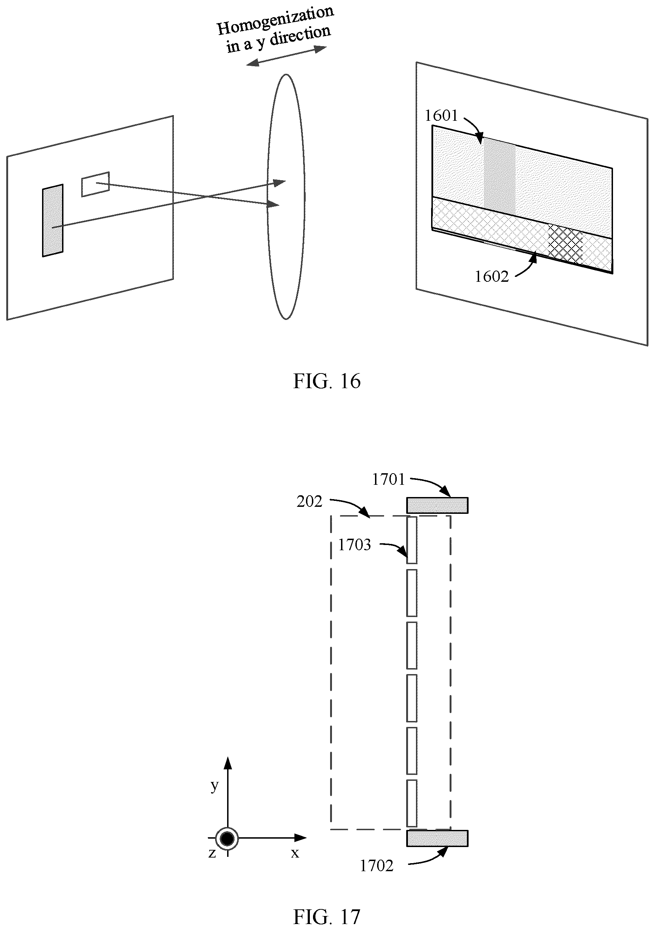

A continuous vision field can be intuitively felt by using light spots. FIG. 16 is a diagram of another light spot according to an embodiment of this application. The beam homogenization component performs, in the y direction, homogenization on the light beams transmitted by the first transmit module 201 and the second transmit module 202, a light spot 1601 is a light spot formed after homogenization is performed on the light beam transmitted by the first transmit module, and a light spot 1602 is a light spot formed after homogenization is performed on the light beam transmitted by the second transmit module. It can be learned that a gap between the light spot formed by the first transmit module 201 and the light spot formed by the second transmit module 202 is filled.

It should be understood that the homogenization may not enable the light beams to be completely evenly distributed in the angular space. For example, the light beams are not evenly homogenized due to impact of a process, costs, device aging, an environmental factor, or the like. The homogenization described in embodiments of this application is not limited to complete homogenization, and this application is also applicable to a solution of incomplete homogenization. As shown in FIG. 16, the light spot 1602 is a light spot formed after homogenization, and although optical signal energy is unevenly distributed in the light spot 1602, a problem of a blind area in a vision field caused by the gap shown in FIG. 14 is still resolved.

This is not limited to the foregoing design. In a possible design, the first transmit module and the second transmit module each include at least one laser (also referred to as a light source in some embodiments).

Optionally, the laser may be an edge emitting laser, a vertical surface-emitting laser, or the like.

When the vertical surface-emitting laser is disposed on a circuit board, a light emitting surface is a surface parallel to the circuit board. Therefore, a light emitting direction of the vertical surface-emitting laser is a direction away from the circuit board. For example, the vertical surface-emitting laser includes but is not limited to one or more of a vertical-cavity surface-emitting laser (vertical-cavity surface-emitting laser, VCSEL), a photonic crystal surface-emitting laser (photonic crystal surface-emitting semiconductor lasers, PCSEL), a fiber laser, and the like.

When an edge emitting laser (edge emitting laser, EEL) is disposed on a circuit board, a light emitting surface is a side of the laser. Therefore, a light emitting direction of the edge emitting laser is a direction parallel to the circuit board. Optionally, the EEL may alternatively be replaced with another apparatus that emits light at an edge of the light emitting component, for example, a silicon photonic chip.

This is not limited to the foregoing design. **In** another possible design, the first transmit module includes two lasers, which are referred to as a first laser and a second laser for ease of differentiation. The first laser and the second laser are respectively disposed on two sides of the second transmit module.

The following uses an example in which the first laser and the second laser are one laser for description. This application is also applicable to a case in which the first laser and/or the second laser include/includes a plurality of lasers.

FIG. 17 is a diagram of locations of a first transmit module and a second transmit module according to an embodiment of this application. The x-y plane is used as an example. The first transmit module includes a first laser 1701 and a second laser 1702, and the first laser 1701 and the second laser 1702 are respectively disposed on two sides of the second transmit module 202.

Optionally, the second transmit module 202 includes a laser 1703, and there may be one or more lasers 1703.

It should be understood that the first laser 1701, the second laser 1702, and the laser 1703 may be lasers of a same type, or may be lasers of different types.

**In** an example of a laser type, the first laser 1701, the second laser 1702, and the laser 1703 are vertical surface-emitting lasers, and light emitting directions of the three lasers are away from a circuit board. For example, the first laser 1701 is a VCSEL or a PCSEL, the second laser 1702 is a VCSEL or a PCSEL, and the laser 1703 is a VCSEL or a PCSEL.

In an example of another laser type, the first laser 1701, the second laser 1702, and the laser 1703 are edge emitting lasers, and light emitting directions of the three lasers are parallel to a circuit board.

In an example of another laser type, in the first laser 1701, the second laser 1702, and the laser 1703, some are vertical surface-emitting lasers, and some are edge emitting lasers. Further, propagation directions of light beams transmitted by some lasers may be changed by using an optical element like a reflection mirror, so that the light beams of the lasers face a same direction.

The following uses an example in which the first laser 1701, the second laser 1702, and the laser 1703 are all vertical surface lasers for description. To be specific, light emitting directions of the plurality of lasers shown in FIG. 17 may be a Z direction. Certainly, this application is also applicable to a laser of another type and a laser in another light emitting manner.

In a possible implementation, in an x direction, a length of the first laser 1701 is greater than a length of the laser 1703. In some scenarios, such disposing may enable the first laser 1701 to form a larger FOV in the x direction, thereby improving an effect of short-distance blind compensation detection. In some other scenarios, it is easier to implement, through such disposing, that an energy density (or a power) of the first laser 1701 is less than an energy density (or a power) of the laser 1703, so that the first laser 1701 can be used to perform short-distance blind compensation detection, thereby improving a short-distance detection capability.

Optionally, in the x direction, a length of the second laser 1702 is greater than a length of the laser 1703. For the related descriptions, refer to the foregoing descriptions.

In another possible implementation, the first laser 1701, the second transmit module 202, and the second laser 1702 are arranged in a y direction. Further, in the x direction, locations of side edges of the first laser 1701, the second transmit module 202, and the second laser 1702 are the same in the x direction (that is, the side edges are aligned).

This is not limited to the foregoing design. In another possible design, the second transmit module includes two laser groups, which are referred to as a first laser group and a second laser group for ease of differentiation. The first laser group includes one or more lasers, and the second laser group includes one or more lasers. The first transmit module is disposed between the first laser group and the second laser group.

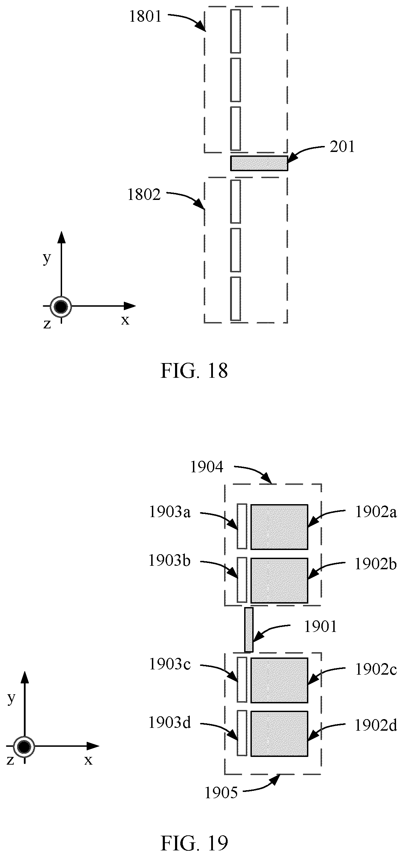

FIG. 18 is another diagram of locations of a first transmit module and a second transmit module according to an embodiment of this application. The x-y plane is used as an example. The second transmit module includes a laser group 1801 and a laser group 1802. The laser group 1801 includes three lasers (this quantity is merely an example), and the laser group 1802 includes three lasers (this quantity is merely an example).

The first transmit module 201 is disposed between the laser group 1801 and the laser group 1802.

Optionally, the laser included in the first transmit module and the laser included in the second transmit module may be lasers of a same type, or may be lasers of different types. For the related descriptions, refer to the foregoing descriptions.

The following uses an example in which both the laser included in the first transmit module and the laser included in the second transmit module are vertical surface lasers for description. To be specific, light emitting directions of the plurality of lasers shown in FIG. 18 may be a Z direction. Certainly, this application is also applicable to a laser of another type and a laser in another light emitting manner.

**In** a possible implementation, in an x direction, a length of the first transmit module 201 is greater than a length of the laser group 1801. **In** some scenarios, such disposing enables the first transmit module 201 to form a larger FOV in the x direction, thereby improving an effect of short-distance blind compensation detection. **In** some other scenarios, in this way, it is easier to implement that the energy density (or the power) of the light beam transmitted by the first transmit module 201 is less than the energy density (or the power) of the laser group 1801. This helps the first transmit module 201 perform short-distance blind compensation detection, and improves a short-distance detection capability.

**In** another possible implementation, in an x direction, a length of the first transmit module 201 is greater than a length of the laser group 1802. For the related descriptions, refer to the foregoing descriptions.

**In** another possible implementation, the laser group 1801, the first transmit module 201, and the laser group 1802 are arranged in a y direction. Further, in the x direction, locations of side edges of the laser group 1801, the first transmit module 201, and the laser group 1802 are the same in the x direction (that is, the side edges are aligned).

FIG. 19 is another diagram of locations of a first transmit module and a second transmit module according to an embodiment of this application. The first transmit module includes a third laser 1901 and N fourth lasers, where N is an integer and N≥2. As shown in FIG. 19, the N fourth lasers include a laser 1902a, a laser 1902b, a laser 1902c, and a laser 1902d. The second transmit module includes N fifth lasers. For example, the N fifth lasers include a laser 1903a, a laser 1903b, a laser 1903c, and a laser 1903d. Optionally, the laser included in the first transmit module and the laser included in the second transmit module may be lasers of a same type, or may be lasers of different types. For the related descriptions, refer to the foregoing descriptions.

The following uses an example in which both the laser included in the first transmit module and the laser included in the second transmit module are vertical surface lasers for description. To be specific, light emitting directions of the plurality of lasers shown in FIG. 19 may be a Z direction. Certainly, this application is also applicable to a laser of another type and a laser in another light emitting manner.

**In** a first direction (for example, the y direction), the third laser 1901 is disposed between a laser group 1904 and a laser group 1905. The laser group 1904 and the laser group 1905 each include a plurality of laser pairs, and each laser pair includes a fourth laser and a fifth laser that are disposed opposite to each other.

For ease of differentiation, the laser group 1904 may be referred to as a third laser group, and the laser group 1905 may be referred to as a fourth laser group. Optionally, the third laser group includes M laser pairs, and the fourth laser group includes N-M laser pairs, where M is an integer, and N>M≥2.

The laser group 1904 is used as an example. The laser group 1904 includes two laser pairs, the two laser pairs are arranged in a first direction (the y direction), each laser pair includes one fourth laser and one fifth laser, and there is a gap (referred to as a first gap for ease of differentiation) between the fourth laser and the fifth laser in each laser pair. For example, the laser 1902a (the fourth laser) and the laser 1903a (the fifth laser) are a laser pair, and the first gap exists between the laser 1902a and the laser 1903a in the second direction (the x direction).

Similarly, the laser group 1905 includes two laser pairs, the two laser pairs are arranged in a first direction (the y direction), and a first gap exists between a fourth laser and a fifth laser in each laser pair. For example, the laser 1902c (the fourth laser) and the laser 1903c (the fifth laser) are a laser pair, and the first gap exists between the laser 1902c and the laser 1903c in the second direction (the x direction).

**In** the second direction (the x direction), a location occupied by the third laser 1901 includes a location of the first gap and a location of the second gap, and the first direction is perpendicular to the second direction.

For example, in the x direction, the left edge of the first gap and the left edge of the second gap are located on an inner side of the left edge of the third laser, or the left edge of the first gap and the left edge of the second gap overlap the left edge of the third laser. The right edge of the first gap and the right edge of the second gap are located on an inner side of the right edge of the third laser, or the right edge of the first gap and the right edge of the second gap overlap the right edge of the third laser.

With reference to FIG. 19, in the x direction, there is a gap between two lasers that belong to different transmit modules and that are in the laser pair, and the gap causes vision fields of light beams transmitted by the two lasers to be discontinuous in the x direction. The third laser 1901 may be disposed to supplement the gap in the x direction, so that the field of view of the first transmit module and the field of view of the second transmit module are continuous in the vision fields. This further reduces a blind area and improves a short-distance detection capability.

Optionally, one fourth laser and one fifth laser in one laser pair are disposed in the second direction (for example, the x direction). Further, optionally, in the y direction, edges of one fourth laser and one fifth laser in one laser pair are aligned.

Optionally, in the x direction, a length of the fourth laser in the laser pair is greater than a length of the fifth laser in the laser pair.

This is not limited to the foregoing designs. **In** another possible design, the transmitting apparatus further includes a collimating lens group. The collimating lens group is configured to collimate the light beams transmitted by the first transmit module and the second transmit module.

Optionally, the collimating lens group may include one or more of a lens, a collimating apparatus, or the like. Optionally, the lenses in some of the foregoing embodiments may be replaced with the collimated lens group.

This is not limited to the foregoing designs. **In** another possible design, the collimating lens group has a convergence function, and there is a focal plane. A transmit end face of the first transmit module and a transmit end face of the second transmit module are defocused with a focal plane of the collimating lens group.

**In** a possible implementation, a distance between the focal plane of the collimating lens group and the collimating lens group is a first distance, a distance between the first plane of the transmitting apparatus and the collimating lens group is a second distance, and the first plane is a plane on which the transmit end face of the first transmit module and the transmit end face of the second transmit module are located.

The second distance is different from the first distance, that is, the "first plane" is defocused.

The foregoing describes some possible designs in embodiments of this application. **In a** specific implementation process, the foregoing plurality of designs may be further combined. The following describes, by using an example, an embodiment obtained by combining some designs. It should be understood that, for modules and logic that are not described in the following manners, reference may be made to the foregoing basic cases and possible designs.

An embodiment of this application provides a transmitting apparatus, including a first transmit module and a second transmit module. The first transmit module and the second transmit module are configured to transmit light beams in a time division manner. The first transmit module is configured to transmit a first light beam. The second transmit module is configured to transmit a second light beam. A longest detection distance of the first light beam is shorter than a longest detection distance of the second light beam.

Embodiment 1 may be further combined with one or more of the foregoing designs. A combination case is not described herein again.

An embodiment of this application provides a transmitting apparatus. The transmitting apparatus includes a first transmit module, a second transmit module, and a beam homogenization component.

The first transmit module is configured to transmit a first light beam. The second transmit module is configured to transmit a second light beam. A longest detection distance of the first light beam is shorter than a longest detection distance of the second light beam.

The beam homogenization component is configured to perform homogenization on the first light beam to obtain a first detection signal.

Further, the beam homogenization component is further configured to perform homogenization on the second light beam to obtain a second detection signal.

Embodiment 2 may be further combined with one or more of the foregoing designs. A combination case is not described herein again.

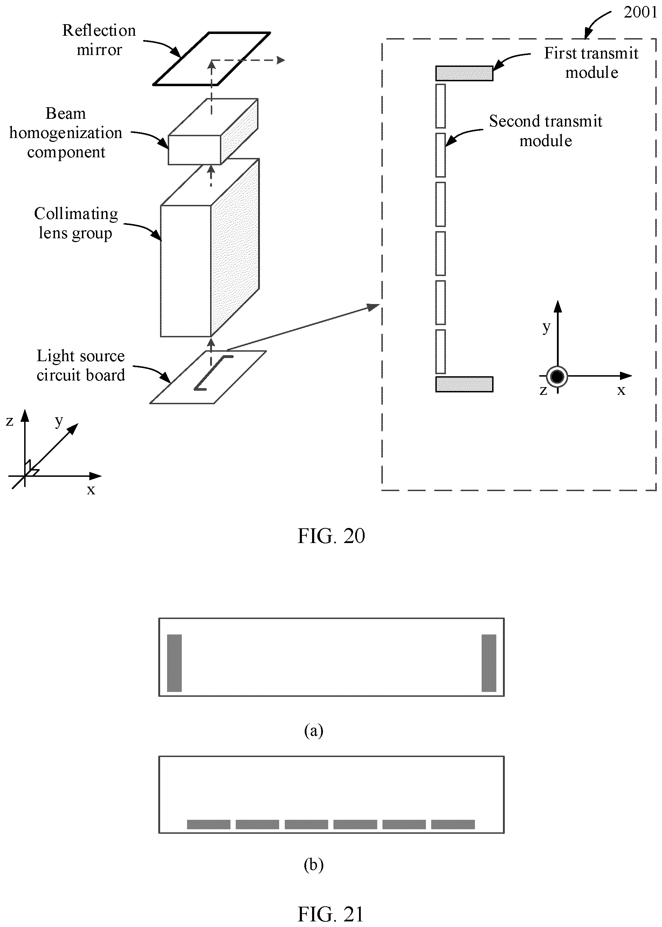

FIG. 20 is a diagram of another possible transmitting apparatus according to an embodiment of this application. A detection apparatus includes a circuit board (or referred to as a light source circuit board), a collimating lens group, and a beam homogenization component, and optionally includes a reflection mirror. Optionally, the beam homogenization component is implemented by using a microlens array. It should be noted that a placement location of each optical element (the collimating lens group, the beam homogenization component, the reflection mirror, or the like) is not limited in embodiments of this application, and a sequence shown in the figure is an example sequence. Optionally, the first transmit module and the second transmit module are disposed on the same circuit board, and are electrically connected to the circuit board.

The first transmit module and the second transmit module are disposed on the light source circuit board. Distribution of the first transmit module (including light sources shown by gray boxes) and the second transmit module (including light sources shown by white boxes) on an x-y plane is shown in a region 2001. The light sources in the second transmit module are spaced from each other in a y direction. The first transmit module includes two parts, and the two parts are respectively arranged at two ends of the second transmit module.

The light source circuit board is configured to drive the first transmit module and the second transmit module to transmit light beams. After collimating and shaping the light beams, the collimating lens group transmits the light beams to the beam homogenization component. Distribution of the collimated light beams in angular space corresponds to distribution of the light sources on the circuit board.

Because the two parts included in the first transmit module are respectively located at the two ends of the second transmit module, there is a gap between the two parts in the y direction, and light spots formed by the light beams transmitted by the first transmit module in the angular space in the y direction are discontinuous. Similarly, the light sources in the second transmit module are spaced from each other in the y direction, and light spots formed by the light beams transmitted by the first transmit module in the angular space in the y direction are discontinuous. FIG. 21 is a diagram of two light shapes according to an embodiment of this application. (a) in FIG. 21 shows light shapes formed by the light beams transmitted by the first transmit module in the angular space in the y direction, and (b) in FIG. 21 shows light shapes formed by the light beams transmitted by the second transmit module in the angular space in the y direction.

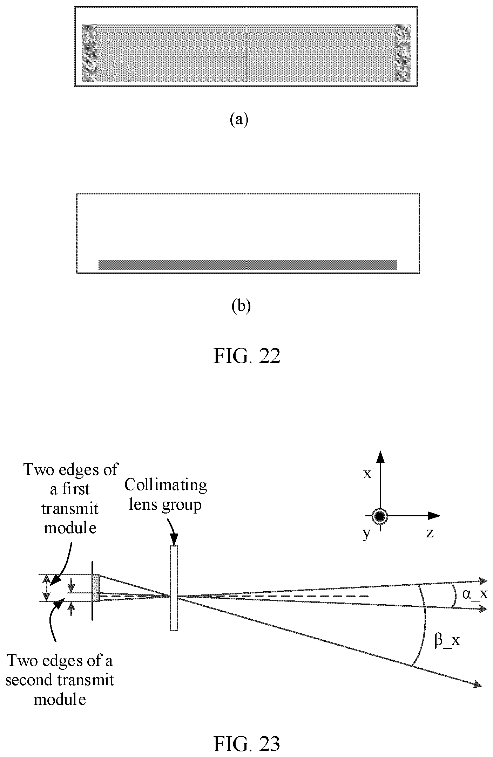

The beam homogenization component may be configured to perform homogenization on the light beams. After the beam homogenization component performs homogenization on the light beams transmitted by the first transmit module, the gap of emergent light in the y direction is filled. Similarly, after the beam homogenization component performs homogenization on the light beams transmitted by the second transmit module, gaps of emergent light in the y direction are filled. FIG. 22 is a diagram of other two light shapes according to an embodiment of this application. (a) in FIG. 22 shows a light shape formed by the homogenized light beams transmitted by the first transmit module in the angular space in the y direction. (b) in FIG. 22 shows a light shape formed by the homogenized light beams transmitted by the second transmit module in the angular space in the y direction.

Optionally, in a period T, the first transmit module emits light in a first time period, and the second transmit module emits light in a second time period. The first time period and the second time period do not overlap.

Optionally, in the embodiment shown in FIG. 20, the light beams transmitted by the first transmit module and the second transmit module may be further implemented to have a continuous vision field in an x direction without a gap. FIG. 23 is a diagram of an FOV according to an embodiment of this application. In the x direction, an FOV of the second transmit module is α_x, and an FOV of the first transmit module is β_x. The FOV of the first transmit module covers the FOV of the second transmit module, so that the field of view for long-distance detection and the field of view for short-distance detection have a continuous vision field in the x direction without a gap.

In conclusion, in embodiments of this application, blind compensation detection in a near vision field range is implemented, and a detected vision field is continuous, so that a blind area range of the near vision field of the detection apparatus is significantly reduced, and detection performance of the detection apparatus is significantly enhanced.

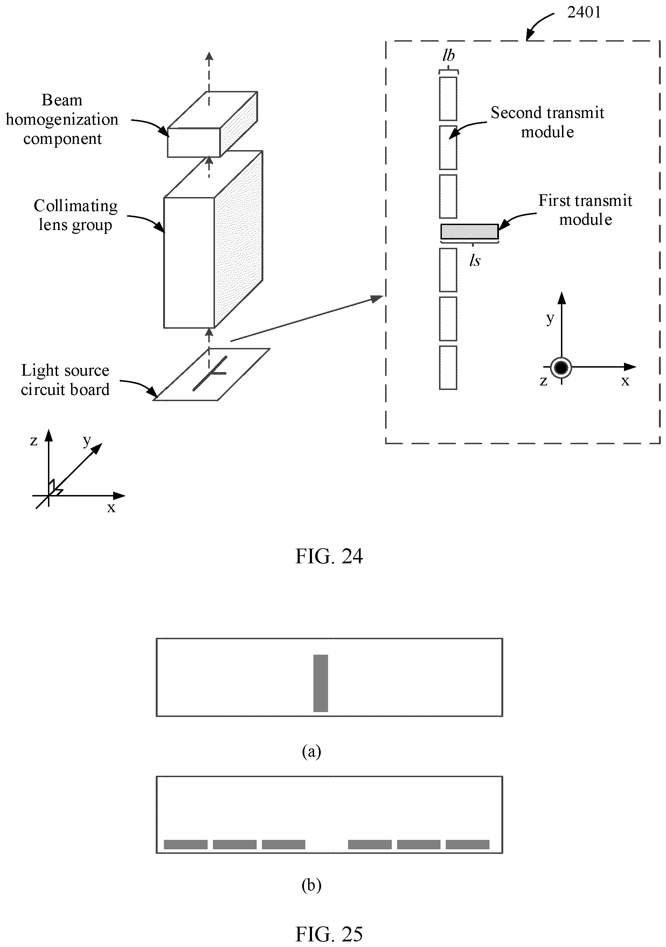

FIG. 24 is a diagram of a possible transmitting apparatus according to an embodiment of this application. The transmitting apparatus includes a light source circuit board, a collimating lens group, and a beam homogenization component. Optionally, the beam homogenization component is implemented by using a microlens array. Optionally, the first transmit module and the second transmit module are disposed on the same circuit board, and are electrically connected to the circuit board.

The first transmit module and the second transmit module are disposed on the light source circuit board. Distribution of the first transmit module (including a light source shown by a gray box) and the second transmit module (including light sources shown by white boxes) on an x-y plane is shown in a region 2401. The light sources in the second transmit module are spaced from each other in a y direction. The first transmit module is disposed among the light sources in the second transmit module.

The light source circuit board is configured to drive the first transmit module and the second transmit module to transmit light beams. After collimating and shaping the light beams, the collimating lens group transmits the light beams to the beam homogenization component. Distribution of the collimated light beams in angular space corresponds to distribution of the light sources on the circuit board.

**In** a possible implementation, in an x direction, a length of the first transmit module is a first length (denoted as ls), a length of the second transmit module is a second length (denoted as lb), and ls>lb. Because the first transmit module and the second transmit module share some optical elements (for example, the collimating lens group), the longer first transmit module has a larger transmitting vision field in the x direction, so that short-distance detection in a larger range can be implemented, and short-distance detection efficiency can be improved.

**In** the transmitting apparatus shown in FIG. 24, in the y direction, the first transmit module is disposed in the middle part of the light source circuit board. Therefore, a light spot formed in the y direction by the light beam transmitted by the first transmit module exists in the middle part of a light emitting region. However, the light sources in the second transmit module are spaced from each other in the y direction, and light spots formed by the light beams transmitted by the first transmit module in the y direction are discontinuous. FIG. 25 is a diagram of other two light shapes according to an embodiment of this application. (a) in FIG. 25 shows a light shape formed by a light beam transmitted by the first transmit module in angular space in the y direction, and (b) in FIG. 25 shows light shapes formed by light beams transmitted by the second transmit module in the angular space in the y direction.

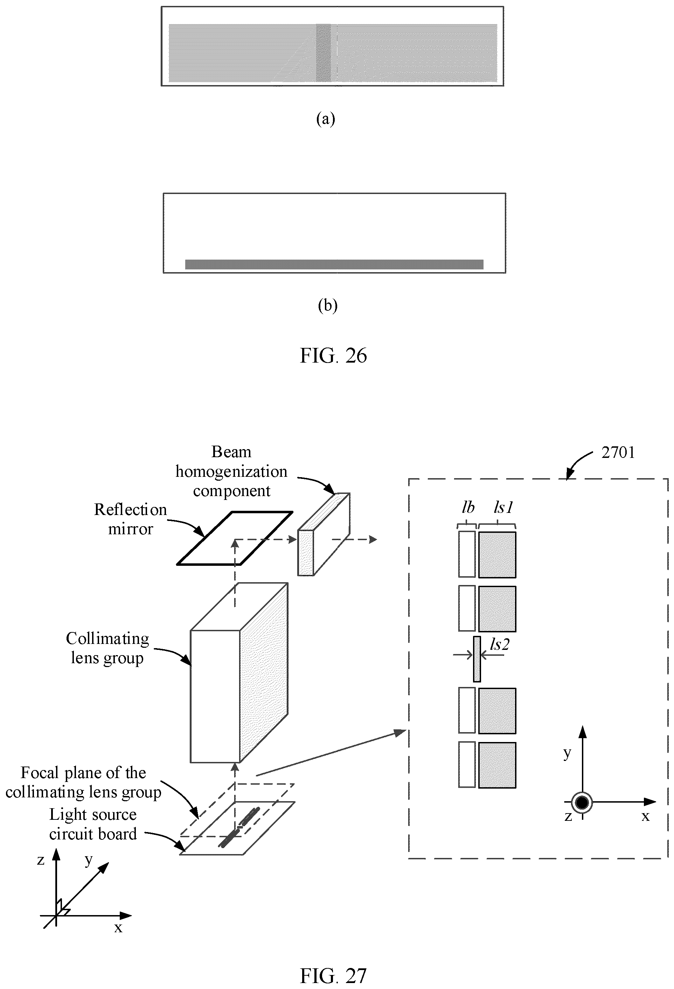

The beam homogenization component may be configured to perform homogenization on the light beams. After the beam homogenization component performs homogenization on the light beam transmitted by the first transmit module, emergent light is dispersed in the y direction. Similarly, after the beam homogenization component performs homogenization on the light beams transmitted by the second transmit module, gaps of emergent light in the y direction are filled. FIG. 26 is a diagram of other two light shapes according to an embodiment of this application. (a) in FIG. 26 shows a light shape formed by the homogenized light beam transmitted by the first transmit module in the angular space in the y direction. (b) in FIG. 26 shows a light shape formed by the homogenized light beams transmitted by the second transmit module in the angular space in the y direction.

Optionally, in a period T, the first transmit module emits light in a first time period, and the second transmit module emits light in a second time period. The first time period and the second time period do not overlap.

In addition, in the embodiment shown in FIG. 24, the light beams transmitted by the first transmit module and the second transmit module may be further implemented to have a continuous vision field in the x direction without a gap. For FOV degrees of the two in the x direction, refer to the related descriptions in FIG. 23. Details are not described herein again.

In conclusion, in embodiments of this application, blind compensation detection in a near vision field range is implemented, and a detected vision field is continuous, so that a blind area range is significantly reduced, and detection performance of a detection apparatus is significantly enhanced.

FIG. 27 is a diagram of a possible transmitting apparatus according to an embodiment of this application. The transmitting apparatus includes a light source circuit board, a collimating lens group, and a beam homogenization component, and optionally includes a reflection mirror. Optionally, the beam homogenization component is implemented by using a microlens array. Optionally, the first transmit module and the second transmit module are disposed on the same circuit board, and are electrically connected to the circuit board.

The first transmit module and the second transmit module are disposed on the light source circuit board. Distribution of the first transmit module (including light sources shown by gray boxes) and the second transmit module (including light sources shown by white boxes) on an x-y plane is shown in a region 2701.

The second transmit module is distributed in a y direction, there is a gap between the two light sources, and a length of the second transmit module in an x direction is a first length (represented as lb). A part of the light sources (for example, referred to as a light source A) in the first transmit module and a light source in the first transmit module are disposed opposite to each other to form a light source pair, and a length of the light source A in the x direction is a second length (represented as ls1). A part of the light sources (for example, referred to as a light source B) in the second transmit module is disposed between the light source pair, and a length of the light source B in the x direction is a third length (represented as ls2).

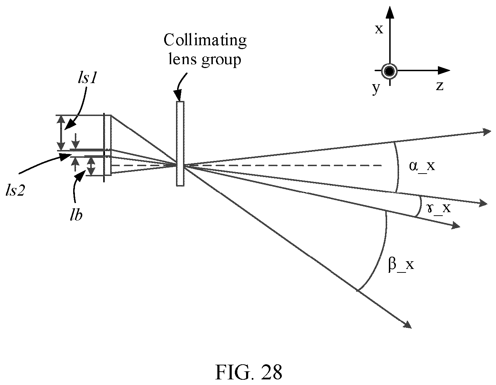

FIG. 28 is a diagram of an FOV of a transmitting apparatus according to an embodiment of this application. In the x direction, an FOV of the second transmit module (lb) of the transmitting apparatus is α_x, an FOV of the light source A (ls1) in the first transmit module is β_x, and an FOV of the light source B (ls2) in the first transmit module is γ_x. In the x direction, the second transmit module, the light source B in the first transmit module, and the light source A in the first transmit module are sequentially arranged, and a light source for transmitting a signal exists at each x coordinate. Therefore, the field of view α_x, the field of view β_x, and the field of view γ_x each have a continuous vision field without a gap. This significantly improves a short-distance detection capability of a detection apparatus, improves detection efficiency, and enhances detection performance.

In the y direction, beam homogenization component can perform homogenization on the light beams, so that a continuous vision field of the transmitting apparatus in the y direction is implemented.

In a possible implementation, in a period T, the first transmit module transmits a first light beam in a first time period, the second transmit module transmits a third light beam in the first time period; and the second transmit module transmits a second light beam in a second time period. A longest detection distance of the third light beam is shorter than a longest detection distance of the second light beam, and a longest detection distance of the first light beam is shorter than the longest detection distance of the second light beam. In this implementation, the second transmit module performs long-distance detection in the second time period, and the first transmit module and the second transmit module are used for short-distance detection in the first time period. This improves vision field coverage during short-distance detection, improves detection efficiency, and enhances detection performance.

In a possible implementation, the light source circuit board is defocused relative to a focal plane of a collimating lens, so that the light beams transmitted by the first transmit module and the second transmit module are dispersed to some extent. This can improve a beam homogenization effect, thereby improving a short-distance detection capability.

An embodiment of this application further provides a detection apparatus. The detection apparatus includes a transmitting apparatus and a photodetector, and the transmitting apparatus includes the transmitting apparatus according to any one implementation of the first aspect or the transmitting apparatus according to any one implementation of the second aspect.

A first transmit module in the transmitting apparatus is configured to transmit a first light beam, and a second transmit module in the transmitting apparatus is configured to transmit a second light beam.

The photodetector is configured to receive an echo signal corresponding to the first light beam and an echo signal corresponding to the second light beam.

In a possible implementation, the detection apparatus further includes a control module. The control module is configured to generate a first control signal and a second control signal, and the first control signal is different from the second control signal. The first control signal is used to control the first transmit module to transmit a light beam. The second control signal is used to control the second transmit module to transmit a light beam.

In this implementation, the first transmit module and the second transmit module are driven by using different control signals. Therefore, the first transmit module and the second transmit module can be isolated from each other in terms of control. This helps control an output optical power of a lidar, and improves signal transmitting flexibility.

An embodiment of this application further provides a terminal. The terminal includes the foregoing transmitting apparatus and/or the foregoing detection apparatus, the transmitting apparatus according to any one design of the first aspect, the transmitting apparatus according to any one design of the second aspect, or the detection apparatus according to any one design of the third aspect.

Optionally, the terminal is a vehicle, an unmanned aerial vehicle, or a robot.

In the descriptions of this application, the terms "center", "upper", "lower", "vertical", "horizontal", "inside", "outside", and the like are orientation or location relationships based on the accompanying drawings, and are merely intended for ease of describing this application and simplifying description, but does not indicate or imply that a described apparatus or element needs to have a specific orientation or needs to be construed and operated in a specific orientation. Therefore, such terms should not be understood as a limitation on this application.

In addition, the Cartesian coordinate system and the directions x, y, and z shown in embodiments of this application are example identifiers for ease of understanding, and are not intended to limit embodiments of this application. In a specific implementation process, there may be another design for a placement manner, an arrangement direction, and an orientation of a light beam of the device, and another coordinate system such as a spherical coordinate system may also be used as a coordinate system.

In embodiments of this application, a term like "example" or "for example" is used to represent giving an example, an illustration, or a description. Any embodiment or design solution described as an "example" or "for example" in this application should not be explained as being more preferred or more advantageous than another embodiment or design solution. To be precise, use of the word like "example" or "for example" is intended to present a relative concept in a specific manner.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, the first transmit module and the second transmit module are merely for ease of description, and do not indicate that the first transmit module and the second transmit module are different in a light emitting manner, a light emitting sequence, importance, or the like.

## Claims

1. A transmitting apparatus, wherein the transmitting apparatus comprises a first transmit module and a second transmit module;
the first transmit module and the second transmit module are configured to transmit light beams in a time division manner, the first transmit module is configured to transmit a first light beam, and the second transmit module is configured to transmit a second light beam; and
a longest detection distance of the first light beam is shorter than a longest detection distance of the second light beam.

2. The transmitting apparatus according to claim 1, wherein an energy density of the first light beam is less than an energy density of the second light beam, and/or a power of the first light beam is less than a power of the second light beam.

3. The transmitting apparatus according to claim 1 or 2, wherein the transmitting apparatus further comprises a beam homogenization component; and
the beam homogenization component is configured to perform homogenization on the first light beam to obtain a first detection signal.

4. The transmitting apparatus according to claim 3, wherein
the beam homogenization component is further configured to perform homogenization on the second light beam to obtain a second detection signal.

5. The transmitting apparatus according to claim 4, wherein a field of view of the first detection signal and a field of view of the second detection signal overlap or have no gap.

6. The transmitting apparatus according to any one of claims 1 to 5, wherein the first transmit module and the second transmit module each comprise at least one laser.

7. The transmitting apparatus according to claim 6, wherein the at least one laser comprises a vertical-cavity surface-emitting laser VCSEL and/or a photonic crystal surface-emitting laser PCSEL.

8. The transmitting apparatus according to claim 6 or 7, wherein the first transmit module comprises a first laser and a second laser; and
the first laser and the second laser are respectively disposed on two sides of the second transmit module.

9. The transmitting apparatus according to claim 6 or 7, wherein the second transmit module comprises a first laser group and a second laser group, the first laser group comprises one or more lasers, and the second laser group comprises one or more lasers; and
the first transmit module is disposed between the first laser group and the second laser group.

10. The transmitting apparatus according to claim 6 or 7, wherein the first transmit module comprises a third laser and N fourth lasers, and the second transmit module comprises N fifth lasers, wherein N is an integer, and N≥2;
in a first direction, the third laser is disposed between a third laser group and a fourth laser group;
the third laser group comprises M laser pairs, the M laser pairs are arranged in the first direction, each laser pair in the M laser pairs comprises one fourth laser and one fifth laser that are disposed in a second direction, and a first gap exists between the fourth laser and the fifth laser in each laser pair, wherein M is an integer, and M>N≥2;
the fourth laser group comprises N-M laser pairs, the N-M laser pairs are arranged in the first direction, each laser pair in the N-M laser pairs comprises one fourth laser and one fifth laser that are disposed in the second direction, and a second gap exists between the fourth laser and the fifth laser in each laser pair; and
in the second direction, a location occupied by the third laser comprises a location of the first gap and a location of the second gap, and the first direction is perpendicular to the second direction.

11. The transmitting apparatus according to any one of claims 1 to 10, wherein the first transmit module is configured to transmit the first light beam in a first time period, the second transmit module is configured to transmit the second light beam in a second time period, and the first time period and the second time period do not overlap.

12. The transmitting apparatus according to any one of claims 1 to 11, wherein the second transmit module is further configured to transmit a third light beam in the second time period, and a longest detection distance of the third light beam is shorter than the longest detection distance of the second light beam.

13. The transmitting apparatus according to any one of claims 1 to 10, wherein the transmitting apparatus further comprises a collimating lens group; and
the collimating lens group is configured to collimate the light beams transmitted by the first transmit module and the second transmit module.

14. The transmitting apparatus according to claim 11, wherein a distance between a focal plane of the collimating lens group and the collimating lens group is a first distance;
a distance between a first plane of the transmitting apparatus and the collimating lens group is a second distance, and the first plane is a plane on which a transmit end face of the first transmit module and a transmit end face of the second transmit module are located; and
the second distance is different from the first distance.

15. A transmitting apparatus, wherein the transmitting apparatus comprises a first transmit module, a second transmit module, and a beam homogenization component;
the first transmit module is configured to transmit a first light beam, the second transmit module is configured to transmit a second light beam, and a longest detection distance of the first light beam is shorter than a longest detection distance of the second light beam; and
the beam homogenization component is configured to perform homogenization on the first light beam to obtain a first detection signal.

16. The transmitting apparatus according to claim 15, wherein the beam homogenization component is further configured to perform homogenization on the second light beam to obtain a second detection signal.

17. The transmitting apparatus according to claim 15, wherein a field of view of the first detection signal and a field of view of the second detection signal overlap or have no gap.

18. The transmitting apparatus according to claim 17, wherein the first transmit module and the second transmit module are configured to transmit light beams in a time division manner.

19. A detection apparatus, wherein the detection apparatus comprises a transmitting apparatus and a photodetector, and the transmitting apparatus comprises the transmitting apparatus according to any one of claims 1 to 14 or the transmitting apparatus according to any one of claims 15 to 18;
a first transmit module in the transmitting apparatus is configured to transmit a first light beam, and a second transmit module in the transmitting apparatus is configured to transmit a second light beam; and
the photodetector is configured to receive an echo signal corresponding to the first light beam and an echo signal corresponding to the second light beam.

20. The detection apparatus according to claim 19, wherein the detection apparatus further comprises a control module, the control module is configured to generate a first control signal and a second control signal, and the first control signal is different from the second control signal;
the first control signal is used to control the first transmit module to transmit a light beam; and
the second control signal is used to control the second transmit module to transmit a light beam.

21. A terminal, wherein the terminal comprises the transmitting apparatus according to any one of claims 1 to 14, or comprises the transmitting apparatus according to any one of claims 15 to 18, or comprises the detection apparatus according to claim 19 or 20.

22. The terminal according to claim 15, wherein the terminal is a vehicle, an uncrewed aerial vehicle, or a robot.
